# EUROPÄISCHE PATENTANMELDUNG

(11) **EP 4 627 976 A1**
(43) Veröffentlichungstag der Anmeldung: **08.10.2025**
(21) Anmeldenummer: 25164934.9
(22) Anmeldetag: 20.03.2025
(51) Int. Cl.: A47J 31/36, A47J 31/42, A47J 31/60, A47J 42/40, A47J 42/44

(54) **MAHLSYSTEM FÜR EINE GETRÄNKEZUBEREITUNGSVORRICHTUNG**

(30) Priorität: 02.04.2024 DE 102024109233
(71) Anmelder: Eugster/Frismag AG, 8580 Amriswil (CH)
(72) Erfinder: Hoffmann, Martin, 9323 Steinach (CH); Tramontana, Marco, 8045 Zürich (CH)
(74) Vertreter: Patent- und Rechtsanwälte Behrmann Wagner PartG mbB

(57) **Zusammenfassung**

Die Erfindung betrifft ein Mahlsystem, zur Bereitstellung einer von einem zuzubereitenden Getränk und/oder Getränkeeigenschaft abhängigen Substratmehlportion, umfassend eine Mahleinheit (1), welche ein Mahlwerk (2) zum Mahlen von Getränkesubstrat zu Substratmehl (3) umfasst, wobei das Mahlwerk (2) eine, insbesondere mit einem Substratspeicher verbindbare, Substratzuführöffnung (4) umfasst, zur Einbringung des Getränkesubstrats in das Mahlwerk (2) und eine Substratmehlausgabe (5), durch welche das gemahlene Substratmehl (3) aus dem Mahlwerk (2) austreten kann, und eine Substratmehlaufnahme (6), insbesondere Brühkammer, welche zur Aufnahme einer Substratmehlportion für die Zubereitung eines Getränks und/oder einer Vielzahl von Getränken ausgebildet ist, wobei die Substratmehlausgabe (5) als Führungs- und/oder Transportmittel zwischen dem Mahlwerk (2) und der Substratmehlaufnahme (6) angeordnet ist, wobei dem Mahlsystem Sensormittel (7), insbesondere eine Lichtschranke, zugeordnet sind, welche zum Detektieren eines Erreichens eines, insbesondere maximalen, Füllstandes von Substratmehl (3) in der Substratmehlaufnahme (6) eingerichtet sind.

## Beschreibung

Die vorliegende Erfindung betrifft ein Mahlsystem zur Bereitstellung einer von einem zuzubereitenden Getränk und/oder Getränkeeigenschaft abhängigen Substratmehlportion, sowie ein Verfahren zum Betrieb eines Mahlsystems und eine Getränkezubereitungsvorrichtung umfassend ein erfindungsgemäßes Mahlsystem.

Bei den aus dem Stand der Technik bekannten automatischen Mahlsystemen, erfolgt die Bestimmung der gemahlenen Menge von Getränkesubstrat in der Regel durch eine Bestimmung des Gewichts des Substratmehls, in der Brühkammer oder dem Sieb. Alternativ wird die Menge des gemahlenen Getränkesubstrats, insbesondere bei Espressomaschinen, erst während des Verdichtens oder Tamperns des Substratmehls, durch die relative Position des Brüh- und/oder Tamperkolbens bestimmt.

Die beschriebenen Methoden weisen dabei den Nachteil auf, dass sie nicht für Substrate kompensieren können, welche ein höheres oder niedrigeres Gewicht bei gleichem Volumen bzw. Dichte aufweisen und/oder unterschiedlich eingestellte Mahlgrade des Substratmehls, welcher zu einer variierend dichten Anlagerung des Getränkesubstratmehls aneinander, bei gleichem Gewicht führen kann. Es besteht also die Gefahr der Überfüllung einer Substratmehlaufnahme und/oder Brühkammer mit Substratmehl, wodurch es zu Verschmutzung oder Fehlfunktion von umliegend verbauten Bauteilen der Getränkezubereitungsvorrichtung kommt, an welchen sich das überschüssige Substratmehl anlagert.

Bei manuell mit Substratmehl zu füllenden Getränkezubereitungsvorrichtungen wiederum, werden gewöhnlich Substratportionier-Löffel zur Verfügung gestellt, um zu verhindern, dass die Brühkammer mit Substratmehl überfüllt wird. Da solche manuellen Befüllungen allerdings immer dem Ermessen des Benutzers untergeordnet sind, besteht auch hier die Gefahr eines Überfüllens einer Getränkesubstratmehlaufnahme, durch falsche Handhabung des Substratportionier-Löffels und damit einhergehenden Schäden an der Getränkezubereitungsvorrichtung, sowie hygienischen Probleme durch Substratmehlrückstände.

Vor diesem Hintergrund besteht die Aufgabe der vorliegenden Erfindung darin die Nachteile im Stand der Technik zu überwinden, insbesondere ein Mahlsystem vorzuschlagen, welches die Füllmenge eines Substratmehls auch bei verschiedenen Arten und Körnungen von Getränkesubstrat, sicher und präzise erfasst.

Diese Aufgabe wird mit einem Mahlsystem mit den Merkmalen des Anspruchs 1 gelöst. Weiterhin wird die Aufgabe mit einem Verfahren zum Betrieb eines Mahlsystems nach Anspruch 14 gelöst und mit einer Getränkezubereitungsvorrichtung umfassend ein Mahlsystem nach Anspruch 13.

Vorteilhafte Ausführungsformen des erfindungsgemäßen Mahlsystem sind Gegenstand der nachfolgenden Beschreibung und Figurenbeschreibungen.

Die vorrichtungsmäßig beschriebenen und beanspruchten Merkmale sollen auch als entsprechend verfahrensmäßig offenbart und beanspruchbar gelten, und umgekehrt.

Das Mahlsystem, sieht wie bereits vorhergehend eingeführt, eine Bereitstellung einer von einem zuzubereitenden Getränk und/oder Getränkeeigenschaft abhängigen Substratmehlportion vor und umfasst eine Mahleinheit, welche ein Mahlwerk zum Mahlen von Getränkesubstrat zu Substratmehl umfasst, wobei das Mahlwerk eine, insbesondere mit einem Substratspeicher verbindbare, Substratzuführöffnung umfasst, zur Einbringung des Getränkesubstrats in das Mahlwerk und eine Substratmehlausgabe, durch welche das gemahlene Substratmehl aus dem Mahlwerk austreten kann, und eine Substratmehlaufnahme, insbesondere Brühkammer, welche zur Aufnahme einer Substratmehlportion für die Zubereitung eines Getränks und/oder einer Vielzahl von Getränken ausgebildet ist, wobei die Substratmehlausgabe als Führungs- und/oder Transportmittel zwischen dem Mahlwerk und der Substratmehlaufnahme angeordnet ist.

Erfindungsgemäß ist dabei vorgesehen, dass dem Mahlsystem Sensormittel, insbesondere eine Lichtschranke, zugeordnet sind, welche zum Detektieren eines Erreichens eines, insbesondere maximalen, Füllstandes von Substratmehl in der Substratmehlaufnahme eingerichtet sind.

Die Mahleinheit ist bevorzugt dazu eingerichtet, durch eine automatische und/oder manuelle Verstellung des Mahlgrads, verschieden fein oder grob gemahlenes Substratmehl bereitzustellen. Dabei ist insbesondere auch denkbar, dass der Mahlgrad von der Mahleinheit in Abhängigkeit, zum Beispiel einer an einer Benutzerschnittstelle eingegebenen, Art von Getränkesubstrat, bevorzugt Kaffee- oder Espressobohnensorte, oder Getränkeintensität automatisch eingestellt wird.

Als Substratmehlaufnahme kann vorliegend eine stationär in einer Getränkezubereitungsvorrichtung verbaute Brühkammer vorgesehen sein, wobei die Brühkammer durchaus derart ausgeführt sein kann, dass sie zum Beispiel zur Reinigung und/oder Wartung, aus der Getränkezubereitungsvorrichtung entnehmbar ist. Alternativ ist auch möglich, dass die Substratmehlaufnahme als frei entnehmbare Brühkammer, wie zum Beispiel das Pulversieb bei einer Siebträgermaschine, ausgebildet ist. Dabei ist beispielhaft auch denkbar, dass die Mahleinheit und/oder das Mahlsystem vollständig oder teilweise separat zu einer Getränkezubereitungsvorrichtung ausgeführt ist und erst ein befülltes Sieb in eine Getränkezubereitungsvorrichtung eingeordnet wird.

Die Substratmehlausgabe ist als Führungs- und/oder Transportmittel zwischen dem Mahlwerk und der Substratmehlaufnahme ausgebildet, wobei als Führen und/oder Transportieren in diesem Zusammenhang ein aktiver Transport des Substratmehls vorgesehen sein kann, zum Beispiel durch eine Förderschnecke. Alternativ kann ein passives Führen vorgesehen werden, zum Beispiel durch ein zwischen der Substratmehlausgabe und der Substratmehlaufnahme angeordnetes, insbesondere rutschenartiges, Führungselement, welches eine räumlich begrenzte Führungsfläche, für das aus dem Mahlwerk ausgegebene Substratmehl bereitstellt, wobei bevorzugt die Bewegung des Substratmehls rein durch die Schwerkraft angetrieben wird.

Die Erfindung hat dabei erkannt, dass durch die Detektion des Füllstandes über die Sensormittel erstaunlich einfach realisiert werden kann, dass unabhängig von den Eigenschaften eines Getränkesubstrats ein Überfüllen der Substratmehlaufnahme verhindert wird. Denn durch das Detektieren des Füllstandes, ganz besonders bevorzugt von einer maximalen Füllhöhe, kann der Zeitpunkt an welchem das Substratmehl in der Substratmehlaufnahme einen Füllstand erreicht, mit welchem ein Brühvorgang und/oder Tampervorgang noch durchgeführt werden kann, ohne dass es, insbesondere durch den beim Tampern auf das Substratmehl einwirkenden Druck, zu einem Überlaufen des Substratmehls aus der Brühkammer kommt, punktgenau abgepasst und ein Füllvorgang und/oder Mahlvorgang gestoppt werden. Dabei wird die Präzision der Detektion nicht durch das Gewicht des benutzten Getränkesubstrats und/oder den für das Substratmehl eingestellten Mahlgrad beeinflusst, da die Detektion des Füllstands auf einer rein räumlichen Erfassung des Füllstandes beruht. Hierbei ergibt sich gegenüber einer Bestimmung des Füllstandes über das Gewicht des Substratmehls auch der Vorteil, dass die Sensormittel, anders als eine Waage, nicht regelmäßig geeicht werden müssen und die Funktion der Füllstandbestimmung daher über einen längeren Zeitraum gewährleistet werden kann, ohne an Genauigkeit zu verlieren. Die Detektion des Füllstandes kann dabei auch technisch besonders einfach für verschiedene Größen von Brühkammern und/oder Sieben umgesetzt werden, da für die Detektion des Füllstandes nicht maßgeblich ist, wie groß das Volumen der Substratmehlaufnahme unter dem zu detektierenden Füllstand ausgebildet ist, wodurch sich besonders gegenüber einer gewichtbasierten Messung ein weiterer Vorteil ergibt. Die Erfindung beruht dabei auch auf der überraschenden Erkenntnis, dass Sensormittel dauerhaft und zuverlässig auch in einer Umgebung eingesetzt werden können, in der loses Substratmehl und eine hohe Luftfeuchtigkeit vorherrschen.

Vorteilhaft kann auch das Erreichen eines minimalen Füllstandes detektiert werden und/oder das Erreichen eines Füllstandes für eine definierte Getränkeintensität oder eine bestimmte Anzahl von Getränken. Hierbei kann vorteilhaft über eine Benutzerschnittstelle das gewünschte Ergebnis eingestellt werden, wobei automatisch angepasst wird, welcher Füllstand durch die Sensormittel detektiert wird. Die Benutzerschnittstelle kann dabei vorteilhaft am Mahlsystem oder an einer Getränkezubereitungsvorrichtung angeordnet sein.

Gemäß einer ersten vorteilhaften Ausführungsform kann vorgesehen sein, dass die Sensormittel einen Signalsender, insbesondere Lichtstrahlensender, und einen Signalempfänger, insbesondere Lichtstrahlenempfänger, umfassen, wobei der Signalsender zum Senden eines Signals an den Signalempfänger eingerichtet ist, welches, insbesondere durch Substratmehl, abgeschnitten werden kann. Dabei ist besonders vorteilhaft vorgesehen, dass der Signalsender zum Erzeugen des Signals als wenigstens temporär, insbesondere für die Dauer eines Mahlvorgangs, konstant oder pulsartig erzeugtem Signal, insbesondere als Lichtschranke, eingerichtet ist. Der Signalsender kann zum Beispiel eine Leuchtdiode mit einer Wellenlänge von 660 nm oder im Infrarotlichtbereich mit 880 bis 940 nm sein. Der Signalempfänger kann zum Beispiel eine Photodiode oder ein Phototransistor sein. Die Umsetzung der Sensormittel mit einem Signalsender und Signalempfänger hat sich als besonders vorteilhaft herausgestellt, da verschiedene Anordnungen und/oder Ausrichtungen der Sensormittel ermöglicht werden, wodurch insbesondere die Anordnung in dem begrenzten Bauraum einer Getränkezubereitungsvorrichtung einfach realisiert werden kann.

Dabei lässt sich auch die Detektion des Füllstands des Substratmehls besonders fehlerresistent ausgestalten, da das vom Signalsender ausgesendete Signal automatisch abgeschnitten wird, wenn der Weg des Signals, bevorzugt durch das sich aufhäufende Substratmehl, abgeschnitten wird. Der Signalempfänger kann hierbei bevorzugt einen passiven und einen aktiven Schaltzustand einnehmen, wobei der Signalempfänger bei Empfangen des vom Signalsender ausgesendeten Signals den passiven Schaltzustand einnimmt, insbesondere so lange bis das Signal unterbrochen wird. Als passiver Zustand soll in diesem Zusammenhang kein Ruhezustand des Signalempfängers verstanden werden, es ist zum Beispiel denkbar, dass der Signalempfänger während des passiven Schaltzustands Daten zu der Dauer des passiven Zustands erfasst und/oder der Signalqualität und/oder Quantität des Signals. Wenn das Signal unterbrochen wird, der Signalempfänger also kein Signal mehr empfängt, wechselt und/oder schaltet der Signalempfänger bevorzugt in den aktiven Zustand, in welchem er Daten und/oder Signale aussendet, welche insbesondere das Erreichen eines Füllstandes kommunizieren.

Gemäß einer weiteren vorteilhaften Ausführung kann vorgesehen sein, dass dem Mahlsystem berührungslose Sensormittel zugeordnet sind, welche konfiguriert sind, um die Anwesenheit und/oder den maximalen Füllstand von Substratmehl in der Substratmehlaufnahme zu detektieren, wobei diese Sensormittel auf jeglichem Messprinzip basieren können, das die berührungslose Erkennung, insbesondere der Anwesenheit der Eigenschaften oder des Zustandes des Substratmehls, ermöglicht. Die berührungslosen Sensormittel sind vorteilhaft zum Beispiel als eine Lichtschranke oder Kapazitive Sensoren ausgebildet.

Gemäß einer weiteren vorteilhaften Ausführung kann vorgesehen sein, dass der Signalsender und Signalempfänger einander gegenüberliegend und/oder aufeinander ausgerichtet ausgebildet sind, wobei das vom Signalsender ausgegebene Signal, bevorzugt unmittelbar, vom Signalempfänger erfasst wird. Diese Ausführung ist besonders fehlerresistent, da der Weg zwischen dem Signalsender und Signalempfänger besonders kurz ausgebildet werden kann, wobei die unmittelbare Übertragung des Signals besonders bevorzugt ist, da so die Anzahl der Bauteile, an welchen die Übertragung gestört und/oder geschwächt werden kann, minimiert wird.

Gemäß einer weiteren vorteilhaften Ausführung kann vorgesehen sein, dass der Signalsender und der Signalempfänger aneinander und/oder nebeneinander ausgebildet sind, wobei dem Signalsender und Signalempfänger gegenüberliegend ein Signalreflektor angeordnet ist, welcher ein vom Signalsender ausgegebenes Signal derart reflektiert, insbesondere zurückwirft, dass das Signal vom Signalempfänger erfasst wird. Bei dieser Ausführungsform kann besonders vorteilhaft die Montage der Sensormittel vereinfacht und besonders platzsparend vorgenommen werden, da eine Verkabelung für den Signalsender und Signalempfänger nur auf einer Seite des Mahlsystems und/oder der Getränkezubereitungsvorrichtung angebracht werden muss. Der Reflektor kann zum Beispiel durch eine reflektierende Folie ausgebildet werden.

Gemäß einer weiteren vorteilhaften Ausführung kann vorgesehen sein, dass das Mahlsystem eine, bevorzugt elektronische, Steuereinheit umfasst, welche mit den Sensormitteln zumindest datentechnisch verbunden ist, wobei die Steuereinheit zur Steuerung der Sensormittel, insbesondere Aktivierung und/oder Deaktivierung, eingerichtet ist. Hierdurch kann vorteilhaft erreicht werden, dass die Sensormittel nicht durchgängig aktiv sind, sondern zum Beispiel nur während einem Mahlvorgang eingeschaltet werden und/oder unabhängig zu einem Mahlvorgang, zum Beispiel für einen Funktionstest, zur Überprüfung der Signalqualität, eingeschaltet werden können. Die Steuereinheit kann zum Beispiel durch ein Computersystem und/oder eine Datenverarbeitungsanlage ausgebildet werden.

Gemäß einer weiteren vorteilhaften Ausführung kann vorgesehen sein, dass die Steuereinheit eine Recheneinheit umfasst, welche zur Auswertung und/oder Speicherung der Signale eingerichtet ist, insbesondere zur qualitativen und/oder quantitativen Auswertung eines Wechsels der Schaltzustände und/oder Signalqualität und/oder Signalquantität des ausgesendeten Signals und/oder empfangenen Signals. Durch die Auswertung der Daten kann die Funktion der Sensormittel noch weiter präzisiert werden, zum Beispiel kann über die Auswertung der Dauer der Schaltzustände dafür kompensiert werden, dass bei einem Aufhäufen von Substratmehl das Signal gegebenenfalls nur kurzzeitig unterbrochen wird, weil das aufgehäufte Substratmehl weiter in die noch nicht gänzlich gefüllte Substratmehlaufnahme rutscht und/oder absinkt, sowie das auch durch den Signalpfad fallendes Substratmehl das Signal für einen kurzen Moment unterbricht. Dabei können die derart erhaltenen Daten vorteilhaft auch gespeichert werden und insbesondere, in Zusammenhang mit über eine Benutzerschnittstelle spezifizierte Daten, wie zum Beispiel die Art des Getränkesubstrats oder die gewünschte Getränkeintensität, für eine Berechnung von optimalen Mahldauern und/oder Mahlgraden durch die Recheneinheit ausgewertet werden. Die Recheneinheit kann zum Beispiel als Datenverarbeitungsanlage und/oder softwarebasiert ausgebildet sein.

Gemäß einer weiteren vorteilhaften Ausführung kann vorgesehen sein, dass die Steuereinheit zumindest datentechnisch mit der Mahleinheit verbunden ist, derart, dass auf Grundlage der ausgewerteten Signale eine Steuerung der Mahleinheit, insbesondere Beginnen und/oder Fortführen und/oder Beenden des Mahlvorgangs durch das Mahlwerk, umsetzbar ist. Durch die Verbindung der Steuereinheit mit der Mahleinheit, kann besonders vorteilhaft der durch die Sensormittel ermittelte Füllstand in eine Steuerung der Mahleinheit umgesetzt werden, insbesondere kann das Mahlwerk bei Erreichen eines maximalen Füllstandes abgeschaltet werden und/oder solange eingeschaltet gelassen werden bis der gewünschte Füllstand erreicht wurde. Dabei kann vorteilhaft auch vorgesehen werden, dass der Mahlgrad der Mahleinheit durch die Steuereinheit eingestellt wird, insbesondere basierend auf der Auswertung von Daten der Sensormittel in Kombination mit den über eine vorteilhaft ausgebildete Benutzerschnittstelle eingegebenen Daten, zum Beispiel zu Getränkesubstratarten und/oder Getränkeintensität. Weiter bevorzugt kann die Steuereinheit auch mit dem Substratspeicher oder einer mit dem Substratspeicher verbundenen Nachfördervorrichtung verbunden sein, um die Menge des benutzten Getränkesubstrats einzustellen und/oder bei einem Fehlen von Getränkesubstrat eine Nachförderung einzuleiten und/oder einen Hinweis an den Benutzer des Mahlsystems und/oder der Getränkezubereitungsvorrichtung, über eine vorteilhaft mit der Steuereinheit verbundene Benutzerschnittstelle, insbesondere digitales Bedienfeld, auszugeben.

Gemäß einer weiteren vorteilhaften Ausführung kann vorgesehen sein, dass die Sensormittel wenigstens zwei, bevorzugt eine Vielzahl, von Paaren von Signalsendern und Signalempfängern umfassen. Durch diese Ausführung können besonders vorteilhaft eine Vielzahl von verschiedenen Füllständen detektiert werden, wobei besonders bevorzugt immer wenigstens ein maximaler Füllstand erfasst wird. Dazu ist bevorzugt wenigstens ein Paar von Signalsender und Signalempfänger wenigstens teilweise zwischen der Mahleinheit und der Substratmehlaufnahme, bevorzugt zwischen der Substratmehlausgabe und der Substratmehlaufnahme, angeordnet. In anderen Worten ausgedrückt ist wenigstens ein Paar von Signalsender und Signalempfänger, im Bereich der Führung und/oder des Transports des Substratmehls und/oder knapp über einem oberen Rand der Substratmehlaufnahme angeordnet. Weiter bevorzugt können durch die Steuereinheit zum Beispiel auch darüber Daten ausgewertet und/oder gespeichert werden, mit welchem zeitlichen Abstand nach Beginn des Mahlvorgangs die verschiedenen Füllstände erreicht wurden, wodurch die Auswertung der Daten, insbesondere für verschiedene Arten von Getränkesubstraten, noch weiter verbessert wird. Weiterbevorzugt kann durch diese Ausführung auch bei Ausfallen eines Paares von Signalsender und Signalempfänger, die Mahlfunktion des Mahlsystems und/oder die Getränkezubereitungsfunktion der Getränkezubereitungsvorrichtung gewährleistet bleiben, indem zum Beispiel bei Ausfallen der Detektion des maximalen Füllstandes, dennoch ein Mahlvorgang bis zu einem niedrigeren Füllstand möglich bleibt.

Gemäß einer weiteren vorteilhaften Ausführung kann vorgesehen sein, dass die Substratmehlaufnahme wenigstens abschnittsweise oder vollständig lichtdurchlässig ausgebildet ist, insbesondere im Bereich von Seitenwänden, wobei die Sensormittel wenigstens teilweise entlang einer Höhe der Substratmehlaufnahme, insbesondere die Substratmehlaufnahme flankierend und/oder außerhalb der Substratmehlaufnahme angeordnet sind, derart, dass das Signal oder die Signale durch die, bevorzugt Seitenwände der, Substrataufnahme gesendet wird/werden. Diese Ausführungsform ist besonders vorteilhaft, um Füllstände innerhalb der Substratmehlaufnahme zu detektieren, wobei durch die Anordnung der Sensormittel neben der Substratmehlaufnahme gleichzeitig ein Schutz der Sensormittel vor Verschmutzung gewährleistet wird.

Gemäß einer weiteren vorteilhaften Ausführung kann vorgesehen sein, dass das Mahlsystem einen, insbesondere relativ zu der Substrataufnahme beweglichen, Brühkolben umfasst, wobei dem Brühkolben, insbesondere als Abstreiflippen und/oder Abstreifborsten ausgebildete, Abstreifmittel zugeordnet sind. Besonders vorteilhaft kann weiterhin vorgesehen sein, dass die Sensormittel an und/oder in einem Innengehäuse des Mahlsystems, insbesondere wenigstens geringfügig über das Innengehäuse hervorstehend, angeordnet sind. Hierdurch wird über das Vorsehen und die Funktion der Abstreifmittel ein automatischer Reinigungsmechanismus auch für die Sensormittel ausgebildet, welcher ermöglicht, dass die Sensormittel, wenigstens teilweise, nach jedem Mahlvorgang von groben Verschmutzungen, insbesondere von Substratmehl gereinigt werden, ohne, dass ein Zutun eines Benutzers des Mahlsystems und/oder der Getränkezubereitungsvorrichtung nötig ist. Ein geringfügiges Überstehen der Sensormittel ist hierbei besonders bevorzugt, um die Abstreifbewegung der Abstreifmittel besonders effektiv zu ermöglichen. Alternativ oder zusätzlich kann auch vorgesehen sein, dass weitere oder alternative und/oder zusätzliche Abstreifmittel an einer, insbesondere mechanischen, Abstreifvorrichtung angeordnet sind, welche manuell und/oder durch eine Antriebseinheit, bevorzugt in die Richtung der Substratmehlaufnahme und/oder des Substratmehls, bewegbar ausgebildet ist. Hiermit wird vorteilhaft ermöglicht, dass auch unabhängig von einem Brühvorgang eine Reinigung der Sensormittel durchgeführt werden kann. Das Innengehäuse ist besonders bevorzugt als zylindrische, insbesondere säulenartige, Erweiterung der Substratmehlaufnahme ausgebildet, wodurch insgesamt ein wenigstens annähernd zylindrischer Hohlraum entsteht, welcher vorteilhaft auch die Bewegung des Brühkolbens führt und begrenzt. Zusätzlich oder alternativ zu einem beweglichen Brühkolben, kann auch die Brühkammer relativ zum Brühkolben beweglich ausgebildet sein, wodurch ebenso die Ausführung einer Abstreifbewegung ermöglicht wird.

Gemäß einer weiteren vorteilhaften Ausführung kann vorgesehen sein, dass das Mahlsystem wenigstens eine, bevorzugt eine Vielzahl von, Reinigungsdüsen, insbesondere Sprühdüsen, aufweist, welche derart angeordnet sind, dass die Sensormittel und/oder die Substrataufnahme von einem oder mehreren Sprühkegeln eines Reinigungsfluids erfasst sind. Bevorzugt sind die Reinigungsdüsen mit der Steuereinheit zumindest datentechnisch verbunden. Durch die Reinigungsdüsen kann vorteilhaft eine Reinigung der Sensormittel erfolgen, wobei durch ein Reinigungsfluid auch schwer zu lösende Verschmutzungen und Verfärbungen entfernt werden können, wodurch die uneingeschränkte Funktion der Sensormittel gewährleistet wird. Die Reinigungsdüsen können verschiedene Anordnungen aufweisen, zum Beispiel kann eine Reinigungsdüse zentral über der Substratmehlaufnahme angeordnet werden, oder zu dieser Position bewegbar ausgebildet sein, wobei die Reinigungsdüse einen Sprühkegel aufweist, mit dem wenigstens Sensormittel auf beiden Seiten neben und/oder über der Substratmehlaufnahme gereinigt werden können, vorteilhaft werden dabei auch Teile des Innengehäuses und/oder der Substratmehlaufnahme gereinigt. Alternativ oder zusätzlich ist auch denkbar, dass wenigstens zwei Reinigungsdüsen, insbesondere sich gegenüberliegend, in und/oder an den Wänden des Innengehäuses angeordnet sind, wobei die Reinigungsdüsen mit einer Neigung angeordnet sind, die es ermöglicht, dass wenigstens ein, insbesondere jeweils diagonal, gegenüberliegender Signalempfänger oder Signalsender von einem Sprühkegel erfasst wird, vorteilhaft auch Teile des Innengehäuses und/oder der Substratmehlaufnahme. Dabei ist möglich, dass die Reinigungsdüsen gleichzeitig oder nacheinander das Reinigungsfluid sprühen.

Gemäß einer weiteren vorteilhaften Ausführung kann vorgesehen sein, dass dem Mahlsystem, bevorzugt am Innengehäuse angeordnete, Lüftungsmittel zugeordnet sind, welche bevorzugt wenigstens datentechnisch mit der Steuereinheit verbunden sind. Die Lüftungsmittel sind vorteilhaft dazu eingerichtet, trockene Luft in das Innengehäuse einzubringen und/oder feuchte Luft aus dem Innengehäuse, insbesondere aus dem Bereich der Sensormittel, abzuführen. Dadurch wird besonders vorteilhaft verhindert, dass sich feuchte Luft im Bereich der Sensormittel sammelt und die durch die Signalsender abgegebenen Signale in Ihrer Brechung beeinflusst, wodurch die Funktion der Sensormittel beeinträchtigt würde. Gleichermaßen wird die Neigung von Substratmehlpartikeln zum Anhaften an Oberflächen verringert. Durch die Steuermittel kann dabei vorteilhaft die Lüftungsleistung, -dauer und -zeitpunkt gesteuert werden, wobei die Lüftungsmittel sowohl vor, während oder nach einem Brühvorgang und/oder Mahlvorgang aktiviert sein können. Die Lüftungsleistung kann hierbei entweder dynamisch und/oder in Stufen eingestellt werden. Die Lüftungsmittel können zum Beispiel durch Ventilatoren und/oder Luftsaugpumpen ausgebildet werden.

Die oben genannte Aufgabe wird auch durch eine Getränkezubereitungsvorrichtung mit einem Mahlsystem gemäß einer der vorangehend beschriebenen Ausführungsformen gelöst. Insbesondere wird die Aufgabe durch eine Kaffee- und/oder Espressomaschine mit einem Mahlsystem gemäß einer der vorangehend beschriebenen Ausführungsformen gelöst.

Weiterhin wird die oben genannte Aufgabe auch durch ein Verfahren zum Betrieb eines Mahlsystems, nach einer der vorhergehenden beschriebenen Ausführungen, insbesondere für eine Getränkezubereitungsvorrichtung, bevorzugt Kaffee- und/oder Espressomaschine, zur Bereitstellung einer von einem zuzubereitenden Getränk und/oder Getränkeeigenschaft abhängigen Substratmehlportion, gelöst, wobei eine Mahleinheit umfasst ist mit einem Mahlwerk, welches Getränkesubstrat zu Substratmehl zermahlt, wobei das Mahlwerk eine, insbesondere mit einem Substratspeicher verbindbare, Substratzuführöffnung umfasst, welche Getränkesubstrat in das Mahlwerk einbringt, und eine Substratmehlausgabe, durch welche das gemahlene Substratmehl aus dem Mahlwerk austritt, und eine Substratmehlaufnahme, insbesondere Brühkammer, welche eine Substratmehlportion für die Zubereitung eines Getränks und/oder einer Vielzahl von Getränken aufnimmt, wobei die Substratmehlausgabe das Substratmehl zwischen dem Mahlwerk und der Substratmehlaufnahme führt und/oder transportiert.

Erfindungsgemäß ist dabei vorgesehen, dass Sensormittel umfasst sind, insbesondere eine Lichtschranke, welche ein Erreichen eines, insbesondere maximalen, Füllstandes von Substratmehl in der Substratmehlaufnahme detektieren.

Zur Vermeidung unnötiger Wiederholung wird im Hinblick auf die vorteilhaften Wirkungen sowie die vorteilhaften Ausführungen des Verfahrens, auf das oben beschriebene Mahlsystem verwiesen. Dies bedeutet auch, dass insgesamt vorrichtungsmäßig offenbarte Merkmale auch verfahrensmäßig offenbart gelten sollen und umgekehrt.

Zusammengefasst ermöglicht das erfindungsgemäße Verfahren, dass die Füllmenge eines Substratmehls auch bei verschiedenen Arten und Körnungen von Getränkesubstrat sicher und präzise erfasst wird.

Gemäß einer vorteilhaften Ausführungsform des Verfahrens kann vorgesehen sein, dass ein Signalsender, insbesondere Lichtstrahlensender, ein Signal an einen Signalempfänger, insbesondere Lichtstrahlenempfänger, sendet, welcher das Signal erfasst, wobei Substratmehl, insbesondere bei Erreichen eines definierten Füllstands in der Substratmehlaufnahme, das Signal abschneidet. Wie bereits oben erwähnt hat sich diese Umsetzung der Sensormittel mit einem Signalsender und Signalempfänger als besonders vorteilhaft herausgestellt, da verschiedene Anordnungen und/oder Ausrichtungen der Sensormittel ermöglicht werden, wodurch insbesondere die Anordnung in dem begrenzten Bauraum eines Mahlsystems und/oder einer Getränkezubereitungsvorrichtung einfach realisiert werden kann. Dabei lässt sich auch die Detektion des Füllstands des Substratmehls besonders fehlerresistent ausgestalten, da das vom Signalsender ausgesendete Signal automatisch blockiert wird, wenn der Weg des Signals, bevorzugt durch das sich aufhäufende Substratmehl, abgeschnitten, wird.

Gemäß einer vorteilhaften Ausführungsform des Verfahrens, kann eine Steuerung der Sensormittel durch eine, bevorzugt elektronische, Steuereinheit welche zumindest datentechnisch mit den Sensormitteln verbunden ist und, insbesondere die Sensormittel aktiviert oder deaktiviert, vorgesehen sein. Hierdurch kann vorteilhaft erreicht werden, dass die Sensormittel nicht durchgängig aktiv sind, sondern zum Beispiel nur während einem Mahlvorgang eingeschaltet werden und/oder unabhängig zu einem Mahlvorgang für einen Funktionstest, zur Überprüfung der Signalqualität, eingeschaltet werden können.

Gemäß einer vorteilhaften Ausführungsform des Verfahrens kann vorgesehen sein, dass eine der Steuereinheit zugeordnete Recheneinheit die Signale auswertet und/oder speichert, insbesondere Wechsel der Schaltzustände und/oder Signalqualität und/oder Signalquantität des ausgesendeten Signals und/oder empfangenen Signals qualitativ und/oder quantitativ auswertet und/oder speichert. Durch die Auswertung der Daten kann die Funktion der Sensormittel noch weiter präzisiert werden, zum Beispiel kann über die Auswertung der Dauer der Schaltzustände dafür kompensiert werden, dass bei einem Aufhäufen von Substratmehl das Signal gegebenenfalls nur kurzzeitig unterbrochen wird, weil das aufgehäufte Substratmehl weiter in die noch nicht gänzlich gefüllte Substratmehlaufnahme rutscht und/oder absinkt, sowie das auch durch den Signalpfad fallendes Substratmehl das Signal für einen kurzen Moment unterbricht. Dabei können die derart erhaltenen Daten vorteilhaft auch gespeichert werden und insbesondere, in Zusammenhang mit über eine Benutzerschnittstelle spezifizierte Daten, wie zum Beispiel die Art des Getränkesubstrats oder die gewünschte Getränkeintensität, für eine Berechnung von optimalen Mahldauern und/oder Mahlgraden durch die Recheneinheit ausgewertet werden.

Gemäß einer weiteren vorteilhaften Ausführungsform kann eine Steuerung der Mahleinheit auf Grundlage der ausgewerteten Signale durch die Steuereinheit, insbesondere Beginnen und/oder Fortführen und/oder Beenden des Mahlvorgangs durch das Mahlwerk, vorgesehen sein. Durch die Verbindung der Steuereinheit mit der Mahleinheit kann besonders vorteilhaft der durch die Sensormittel ermittelte Füllstand in eine Steuerung der Mahleinheit umgesetzt werden, insbesondere kann das Mahlwerk bei Erreichen eines maximalen Füllstandes abgeschaltet werden und/oder solange eingeschaltet gelassen werden, bis der gewünschte Füllstand erreicht wurde. Dabei kann vorteilhaft auch vorgesehen werden, dass der Mahlgrad der Mahleinheit durch die Steuereinheit eingestellt wird, insbesondere basierend auf den über eine vorteilhaft ausgebildete Benutzerschnittstelle angegebenen Daten zu der Getränkesubstratart und/oder einer gewünschten Getränkeintensität. Weiter bevorzugt kann die Steuereinheit auch mit dem Substratspeicher oder einer mit dem Substratspeicher verbundenen Nachfördervorrichtung verbunden sein, um die Menge des benutzen Getränkesubstrats einzustellen und/oder bei einem Fehlen von Getränkesubstrat eine Nachförderung einzuleiten und/oder einen Hinweis an den Benutzer des Mahlsystems und/oder der Getränkezubereitungsvorrichtung über eine vorteilhaft mit der Steuereinheit verbundene Benutzerschnittstelle auszugeben.

Gemäß einer vorteilhaften Ausführungsform kann vorgesehen sein, dass die Sensormittel von der Steuereinheit aktiviert werden, bevor die Mahleinheit, insbesondere bei Beginn eines Mahl- und/oder Brühvorgangs, von der Steuereinheit aktiviert wird. Hierdurch kann besonders vorteilhaft erreicht werden, dass vor Beginn eines Mahlvorgangs die Funktion der Sensormittel überprüft wird, insbesondere ob der Signalpfad unbeeinträchtigt von Verschmutzungen ist, und gegebenenfalls eine Benachrichtigung, zum Beispiel, dass eine Reinigung nötigt ist über eine Benutzerschnittstelle ausgegeben werden und/oder ein Reinigungsvorgang automatische eingeleitet werden, bevor der Mahlvorgang eingeleitet wird und/oder werden kann.

Gemäß einer vorteilhaften Ausführungsform kann ein Abstreifen der Sensormittel durch, insbesondere als Abstreiflippen und/oder Abstreifborsten ausgebildete, Abstreifmittel an einem beweglichen Brühkolben, welcher sich zur Einleitung eines Brühvorgangs in Richtung der Substratmehlaufnahme bewegt, wodurch die Abstreifmittel eine abstreifende Bewegung an und/oder über die Sensormittel und/oder das Innengehäuse und/oder die Substratmehlaufnahme, insbesondere die innere Seite der Seitenwände, ausführen. Die abstreifende Bewegung der Abstreifmittel wird insbesondere sowohl beim Herunterfahren des Brühkolbens in Richtung der Substratmehlaufnahme ausgeführt, als auch beim Rückführen des Brühkolbens in seine Ausgangsposition. Als innere Seite der Seitenwände soll in diesem Zusammenhang die Seite verstanden werden, welche dem Substratmehl zugewandt ist. Das Innengehäuse ist besonders bevorzugt als zylindrische, insbesondere säulenartige, Erweiterung der Substratmehlaufnahme ausgebildet, wodurch insgesamt ein wenigstens annähernd zylindrischer Hohlraum entsteht, welcher vorteilhaft auch die Bewegung des Brühkolbens führt und begrenzt. In einer alternativen Ausführungsform kann zusätzlich oder alternativ zu einem beweglichen Brühkolben auch vorgesehen sein, dass die Substratmehlaufnahme relativ beweglich zu einem beweglichen oder unbeweglichen Brühkolben ausgebildet ist, wodurch gleichermaßen eine Abstreifbewegung erreicht wird.

Gemäß einer vorteilhaften Ausführungsform kann vorgesehen sein, dass vor und/oder nach einem Mahlvorgang und/oder Getränkebrühvorgang die Steuereinheit Reinigungsdüsen ansteuert, insbesondere aktiviert und deaktiviert, welche mit einem Reinigungsfluid die Sensormittel und/oder Substratmehlaufnahme reinigen, bevorzugt absprühen. Durch die Reinigungsdüsen kann vorteilhaft eine Reinigung der Sensormittel erfolgen, wobei durch ein Reinigungsfluid auch schwer zu lösende Verschmutzungen und Verfärbungen entfernt werden können, wodurch die uneingeschränkte Funktion der Sensormittel gewährleistet wird.

Gemäß einer vorteilhaften Ausführungsform kann vorgesehen sein, dass die Steuereinheit Lüftungsmittel steuert, welche, insbesondere feuchte, Luft aus dem Bereich der Sensormittel abführen und, insbesondere trockene, Luft zuführen. Die Lüftungsmittel sind vorteilhaft dazu eingerichtet, trockene Luft in das Innengehäuse einzubringen und/oder feuchte Luft aus dem Innengehäuse, insbesondere aus dem Bereich der Sensormittel, abzuführen. Dadurch wird besonders vorteilhaft verhindert, dass sich feuchte Luft im Bereich der Sensormittel sammelt und die durch die Signalsender abgegebenen Signale in Ihrer Brechung beeinflusst und somit die Funktion der Sensormittel beeinträchtig.

Nachfolgend wird die vorliegende Erfindung anhand von lediglich schematische, beispielhafte Ausführungsformen der Erfindung zeigenden Zeichnungen näher erläutert.
- Fig. 1a:: eine schematische Seitenansicht eines erfindungsgemäßen Mahlsystems mit einer ersten Ausführungsform der Sensormittel
- Fig. 1b:: eine schematische Seitenansicht eines erfindungsgemäßen Mahlsystems mit einer zweiten Ausführungsform der Sensormittel
- Fig. 2a:: eine schematische Ansicht eines Teils eines erfindungsgemäßen Mahlsystems mit Abstreifmittel in einer ersten Ausführungsform
- Fig. 2b:: eine schematische Ansicht eines Teils eines erfindungsgemäßen Mahlsystems mit Abstreifmittel in einer zweiten Ausführungsform
- Fig. 2c:: eine Übersicht von möglichen Ausbildungsformen der Abstreifmittel
- Fig. 3a:: eine schematische Ansicht eines Teils eines erfindungsgemäßen Mahlsystems mit einer Reinigungsdüse in einer ersten Ausführungsform
- Fig. 3b:: eine schematische Ansicht eines Teils eines erfindungsgemäßen Mahlsystems mit einer Reinigungsdüse in einer zweiten Ausführungsform
- Fig. 4:: eine schematische Ansicht eines Teils eines erfindungsgemäßen Mahlsystems mit Lüftungsmitteln in einer ersten Ausführungsform
- Fig. 5:: eine systematische Darstellung eines Betriebs eines erfindungsgemäßen Mahlsystems

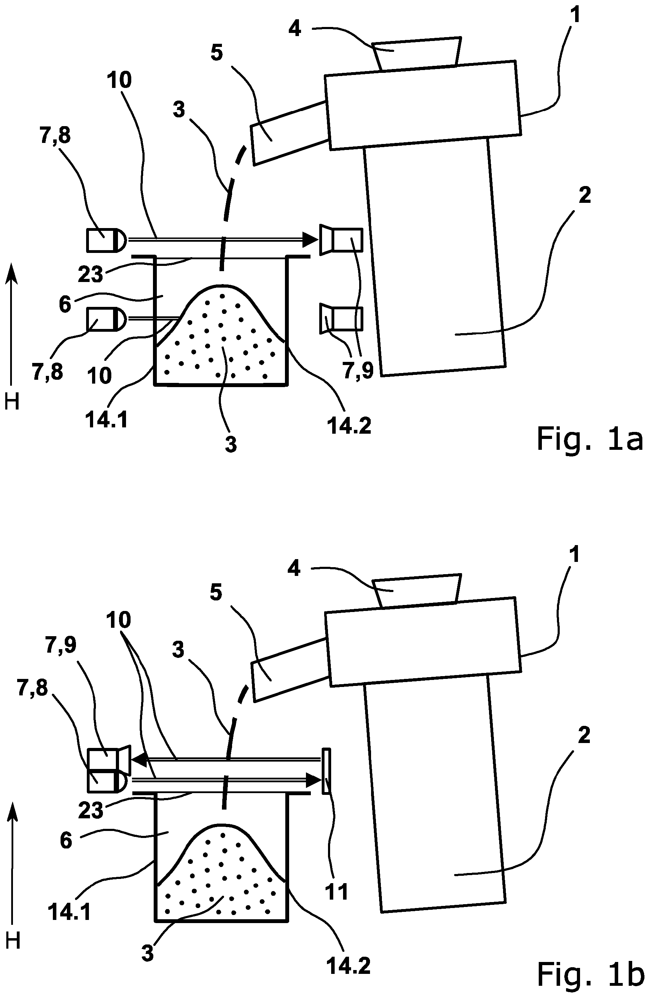

In der Fig. 1a wird ein erfindungsgemäßes Mahlsystem gezeigt, mit einer Mahleinheit 1, welche ein Mahlwerk 2 umfasst, wobei die Mahleinheit 1 bevorzugt dazu eingerichtet ist, durch eine automatische und/oder manuelle Verstellung des Mahlgrads verschieden fein gemahlenes Substratmehl 3 aus Getränkesubstrat herzustellen. Das Mahlsystem und/oder die Mahleinheit 1 kann dabei bevorzugt integraler Bestandteil einer nicht dargestellten Getränkezubereitungsvorrichtung, beispielsweise in Form eines sogenannten Kaffeevollautomaten sein. Dabei ist auch möglich, dass der Mahlgrad, insbesondere in Abhängigkeit einer gewünschten Getränkeeigenschaft oder einer Art des Getränkesubstrats, welche bevorzugt an einer hier nicht dargestellten Benutzerschnittstelle 22 definiert werden kann, von der Mahleinheit 1 automatisch eingestellt wird. Die Mahleinheit 1 umfasst weiterhin eine Substratzuführöffnung 4, welche vorteilhaft mit einem Substratspeicher verbindbar ist, durch welche Getränkesubstrat in das Mahlwerk 2 eingebracht werden kann und eine Substratmehlausgabe 5, durch welche das vom Mahlwerk 2 gemahlene Substratmehl 3 aus dem Mahlwerk 2 austreten kann. Die Substratmehlausgabe 5 ist dabei zur Führung und/oder Transport des Substratmehls 3 von der Mahleinheit 1 zur Substratmehlaufnahme 6 eingerichtet, wobei die Substratmehlausgabe 5 hierzu besonders vorteilhaft rutschenartig ausgebildet ist, mit einer geneigten Führungsfläche, wobei das Substratmehl 3 nur durch die Schwerkraft angetrieben wird. Die Substratmehlaufnahme 6 ist insbesondere als Brühkammer, Brüheinheit und/oder als Espressosieb ausgebildet, wobei die Substratmehlaufnahme 6 unentnehmbar, nur zu Reinigungs- und/oder Wartungszwecken entnehmbar oder grundsätzlich entnehmbar ausgebildet sein kann. Die Substratmehlaufnahme 6 kann ebenso entweder wenigstens teilweise beweglich ausgebildet sein, zum Beispiel um eine Brühposition und/oder eine Ruheposition einnehmen zu können, oder unbeweglich ausgebildet sein. Umfasst von der Substratmehlaufnahme 6 sind Seitenwände 14.1, 14.2, wobei die Substratmehlaufnahme 6 insbesondere zylindrisch ausgebildet ist, welche zumindest teilweise lichtdurchlässig ausgeführt sind, bevorzugt aus lichtdurchlässigem Material, zum Beispiel transparentem und hitzebeständigem Kunststoff, bestehen.

Das Mahlsystem umfasst des Weiteren Sensormittel 7, welche Signalsender 8 und Signalempfänger 9 umfassen, wobei ein Paar von Signalsender 8 und Signalempfänger 9 sich gegenüberliegend über dem oberen Rand 23 der Substratmehlaufnahme 6 angeordnet ist, derart, dass sie die Seitenwände 14.1, 14.2 flankieren und/oder außerhalb der Substratmehlaufnahme 6 angeordnet sind und ein Paar entlang der Höhe H der Substratmehlaufnahme 6, die Seitenwände 14.1, 14.2 an ihrer vom Substratmehl 3 abgewandten Seite flankierend, angeordnet ist. Die Signalsender 8 sind hierbei dazu eingerichtet ein Signal 10 abzugeben, insbesondere ein wenigstens temporär konstantes Signal, ganz besonders bevorzugt durch eine Lichtschranke, welches von den Signalempfängern 9 unmittelbar empfangen wird. Durch das Empfangen des Signals 10 und bevorzugt solange bis das Signal 10 nicht mehr empfangen wird, nehmen die Signalempfänger 9 einen passiven Schaltzustand ein, wobei im passiven Schaltzustand zum Beispiel Daten über die Dauer des passiven Schaltzustands von der Steuereinheit 12 erfasst und/oder an die Steuereinheit 12 gesendet werden können. Die Steuereinheit 12 kann dem Mahlsystem zugeordnet sein. Die Steuereinheit 12 kann alternativ auch als zentrale Steuereinheit 12 einer Getränkezubereitungsvorrichtung ausgebildet sein und wenigstens datentechnisch mit dem Mahlsystem verbunden sein. Wenn ein Signalempfänger 9 kein Signal 10 empfängt, nachdem er vorher ein Signal 10 empfangen hat, wechselt der Signalempfänger 9 in einen aktiven Schaltzustand, in dem er Daten und/oder Signale an eine hier nicht dargestellte Steuereinheit 12 sendet, welche insbesondere das Erreichen eines maximalen Füllstands anzeigen. Die Abschneidung des Signals 10 wird hierbei besonders bevorzugt durch das sich anhäufende Substratmehl 3 bewerkstelligt, wobei die Sensormittel 7 insbesondere derart eingerichtet sind, dass der Signalempfänger 9 erst bei Überschreiten einer definierten Dauer, für welche das Signal 10 nicht mehr empfangen wird, ein Signal und/oder Daten zum Anzeigen des Erreichens eines Füllstandes abgibt. Die Dauer ist dabei vorteilhaft dahingehend eingestellt ist, dass zum Beispiel durch den Signalpfad des Signals 10 fallendes Substratmehl 3 und/oder Substratmehl 3, welches sich kurzzeitig an der Spitze des Substratmehlhaufens ablagert, bevor es tiefer in die Substratmehlaufnahme rutscht, nicht zu einem Ausgeben eines diesbezüglichen Signals und/oder Daten führt.

Die Sensormittel 7 können ein Paar von Signalsender 8 und Signalempfänger 9 umfassen oder eine Vielzahl von Paaren. Dabei ist besonders bevorzugt, dass wenigstens ein Paar von Signalsender 8 und Signalempfänger 9, wie bereits vorhergehend beschrieben, über dem Rand 23 angeordnet ist, um insbesondere einen maximalen Füllstand zu detektieren und wenigstens ein Paar, entlang der Höhe H der Substratmehlaufnahme 6, die Seitenwände 14.1, 14.2 an ihrer vom Substratmehl 3 abgewandten Seite flankierend, angeordnet ist, wobei das Signal 10 durch die Seitenwände hindurch gesendet wird, um einen Füllstand in der Substratmehlaufnahme 6 zu detektieren.

In der Fig. 1b wird ein weitere mögliche Ausführungsform der Sensormittel 7 an einem erfindungsgemäßen Mahlsystem gezeigt. Die Sensormittel 7 umfassen hierbei einen Signalsender 8 und einen Signalempfänger 9 welche auf derselben Seite über dem oberen Rand 23 der Substratmehlaufnahme 6 und einem Signalreflektor 11 gegenüberliegend angeordnet sind, derart, dass der Signalsender 8 und Signalempfänger 9 auf der einen Seite und der Signalreflektor 11 auf der gegenüberliegenden Seite die Seitenwände 14.1, 14.2 flankieren. Durch diese Anordnung kann eine Verkabelung des Signalsender 8 und Signalempfänger 9 bevorzugt auf einer Seite des Mahlsystems vorgenommen werden. Der Signalsender 8, ganz besonders bevorzugt eine Lichtschranke, sendet hierbei ein Signal 10, insbesondere ein wenigstens temporär konstantes Signal aus, welches durch den Signalreflektor 11 reflektiert und/oder zurückgeworfen wird. Der Signalreflektor 11 ist hierbei derart angeordnet, dass das Signal 10 auf den Signalempfänger 9 gelenkt und von diesem mittelbar empfangen wird. Durch das Empfangen des Signals 10 und bevorzugt solange bis das Signal 10 nicht mehr empfangen wird, nimmt der Signalempfänger 9 einen passiven Schaltzustand ein, wobei im passiven Schaltzustand zum Beispiel Daten über die Dauer des passiven Schaltzustands von der Steuereinheit 12 erfasst und/oder vom Signalempfänger 9 an die Steuereinheit 12 gesendet werden können. Wenn der Signalempfänger 9 kein Signal 10 empfängt, nachdem er vorher ein Signal 10 empfangen hat, wechselt der Signalempfänger 9 in einen aktiven Schaltzustand, in dem er Daten und/oder Signale an eine hier nicht dargestellte Steuereinheit 12 sendet, welche insbesondere das Erreichen eines maximalen Füllstands anzeigen. Die Abschneidung des Signals 10 wird hierbei besonders bevorzugt durch das sich anhäufende Substratmehl 3 bewerkstelligt, wobei die Sensormittel 7 insbesondere derart eingerichtet sind, dass der Signalempfänger 9 erst bei Überschreiten einer definierten Dauer für welche das Signal 10 nicht empfangen wird, ein Signal und/oder Daten zum Anzeigen des Erreichens eines Füllstandes abgibt. Die Dauer ist dabei vorteilhaft dahingehend eingestellt ist, dass zum Beispiel durch den Signalpfad des Signals 10 fallendes Substratmehl 3 und/oder Substratmehl 3, welches sich kurzzeitig an der Spitze des Substratmehlhaufens ablagert, bevor es tiefer in die Substratmehlaufnahme rutscht, nicht zu einem Ausgeben eines diesbezüglichen Signals und/oder Daten führt.

Die Sensormittel 7 können eine Gruppe von Signalsender 8, Signalempfänger 9 und Signalreflektor umfassen oder eine Vielzahl von Gruppen. Dabei ist besonders bevorzugt, dass wenigstens eine Gruppe von Signalsender 8, Signalempfänger 9 und Signalreflektor 11, wie bereits vorhergehend beschrieben, über dem Rand 23 angeordnet ist, um insbesondere einen maximalen Füllstand zu detektieren und wenigstens eine Gruppe, entlang der Höhe H der Substratmehlaufnahme 6, die Seitenwände 14.1, 14.2 an ihrer vom Substratmehl 3 abgewandten Seite flankierend, angeordnet ist, wobei das Signal 10 durch die Seitenwände hindurch und zurück gesendet wird, um einen Füllstand in der Substratmehlaufnahme 6 zu detektieren.

Die Ausführungsform der Sensormittel 7 aus der Fig. 1a mit Paaren von Signalsendern 8 und Signalempfängern 9, sowie die Ausführungsformaus der Fig. 1b mit Gruppen von Signalsendern 8, Signalempfängern 9 und Signalreflektoren 11, können hierbei beide in einem Mahlsystem, in einer Zusammenstellung von Sensormitteln 7 vorkommen.

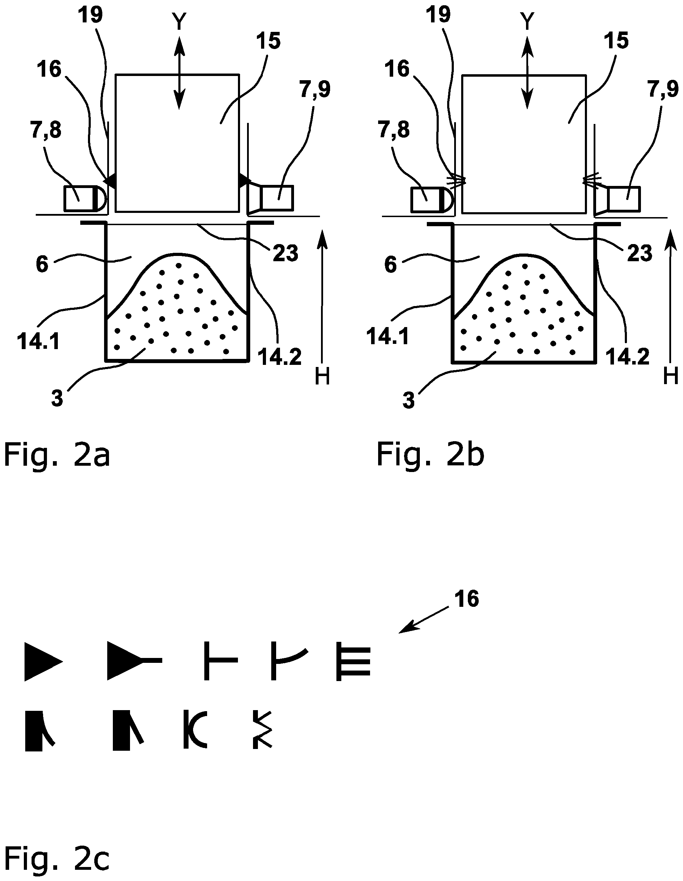

Die Fig. 2a und b zeigen Teile eines Mahlsystems mit einer Substratmehlaufnahme 6, welche insbesondere als Brühkammer und/oder als Espressosieb ausgebildet ist, wobei die Substratmehlaufnahme 6 unentnehmbar, nur zu Reinigungs- und/oder Wartungszwecken entnehmbar oder grundsätzlich entnehmbar ausgebildet sein kann. Die Substratmehlaufnahme 6 kann ebenso entweder wenigstens teilweise beweglich ausgebildet sein, zum Beispiel um eine Brühposition und/oder eine Ruheposition einnehmen zu können, oder unbeweglich ausgebildet sein. Umfasst von der Substratmehlaufnahme 6 sind Seitenwände 14.1, 14.2, wobei die Substratmehlaufnahme 6 insbesondere zylindrisch ausgebildet ist, welche zumindest teilweise lichtdurchlässig ausgeführt sind, bevorzugt aus lichtdurchlässigem Material, zum Beispiel aus einem transparentem und hitzebeständigem Kunststoff, bestehen.

Weiterhin umfasst sind Sensormittel 7, bevorzugt eine Lichtschranke, umfassend einen Signalsender 8 und einen Signalempfänger 9, wobei der Signalsender 8 dazu eingerichtet ist ein, insbesondere wenigstens temporär konstantes, Signal 10 abzugeben, welches vom Signalempfänger 9 empfangen wird. Bei Empfangen des Signals 10 nimmt der Signalempfänger 9 einen passiven Schaltzustand ein, in welcher er insbesondere keine Signale sendet, wobei zum Beispiel die Dauer des passiven Zustands durch den Signalempfänger 9 oder die Steuereinheit 12 erfasst werden kann. Wenn der Signalempfänger 9 kein Signal 10 mehr empfängt, zum Beispiel, weil das Signal 10 durch das sich aufhäufende Substratmehl 3 abgeschnitten wurde, wechselt der Signalempfänger 9 in einen aktiven Schaltzustand, in welchem er Signale und/oder Daten an eine hier nicht dargestellte Steuereinheit 12 sendet. Der Signalsender 8 kann zum Beispiel eine Leuchtdiode mit einer Wellenlänge von 660 nm oder im Infrarotlichtbereich mit 880 bis 940 nm sein. Der Signalempfänger 9 kann zum Beispiel eine Photodiode oder ein Phototransistor sein. Die Sensormittel 7 können ein Paar von Signalsender 8 und Signalempfänger 9 umfassen oder eine Vielzahl von Paaren und/oder eine Gruppe von Signalsender 8, Signalempfänger 9 und Signalreflektor 11 oder eine Vielzahl von Gruppen. Die Sensormittel sind über dem oberen Rand 23 der Substratmehlaufnahme 6 angeordnet, derart, dass sie die Seitenwände 14.1, 14.2 flankieren, wobei ebenso denkbar ist, dass die Sensormittel 7 vollständig oder teilweise die Seitenwände 14.1, 14.2 flankierend entlang der Höhe H der Substratmehlaufnahme 6 angeordnet sind.

Die Sensormittel 7 sind wenigstens teilweise an und/oder in einem Innengehäuse 19 angeordnet, bevorzugt wenigstens geringfügig erhaben über die dem Brühkolben 15 zugewandte Seite des Innengehäuses 16 überstehend. Das Innengehäuse 19 ist besonders bevorzugt als zylindrische, insbesondere säulenartige, Erweiterung der Substratmehlaufnahme 6 ausgebildet, wodurch insgesamt ein wenigstens annähernd zylindrischer Hohlraum entsteht, welcher vorteilhaft auch die Bewegung des Brühkolbens 15 führt und begrenzt. Der Brühkolben 15 ist insbesondere zum Tampern und/oder Kompressieren des Substratmehls 3 eingerichtet und/oder zum Einleiten eines Brühfluids in die Substratmehlaufnahme 6. Der Brühkolben 15 ist hierbei dazu eingerichtet, sich auf einer Bewegungsachse Y zu bewegen, wobei dem Brühkolben wenigstens ein Paar von Abstreifmitteln 16 zugeordnet ist, welche zum Beispiel als Abstreiflippen wie in Fig. 2a und/oder als Abstreifborsten wie in Fig. 2b und/oder in einer der in Fig. 2c gezeigten Formen ausgebildet sein können, wobei noch weitere Ausbildungsformen möglich sind. Bei einer Bewegung des Brühkolbens 15 entlang der Bewegungsrichtung Y auf die Substratmehlaufnahme 6 zu und/oder in diese hinein, führen die Abstreifmittel 16 eine abstreifende Bewegung über die Sensormittel 7 und/oder Teile des Innengehäuses 19 und/oder Teile der Substratmehlaufnahme 6 aus, wodurch insbesondere grobe Verschmutzungen zum Beispiel durch Substratmehl 3 entfernt werden. Durch die Rückkehr des Brühkolbens 15 in seine Ausgangsposition entlang der Bewegungsrichtung Y, nach Vollendung eines Brühvorgangs, führen die Abstreifmittel 16 erneut eine abstreifende Bewegung über die Sensormittel 7 und/oder Teile des Innengehäuses 19 und/oder Teile der Substratmehlaufnahme 6 aus. Die Abstreifmittel 16 sind bevorzugt auswechselbar und/oder reversibel oder irreversibel entnehmbar ausgebildet, wobei besonders bevorzugt eine hier nicht gezeigte Steuereinheit 12 nach einer definierten Anzahl von Bewegungen des Brühkolbens 15 und/oder Mahlvorgängen, über eine hier nicht gezeigte Benutzerschnittstelle 22 einem Benutzer des Mahlsystems und/oder einer Getränkezubereitungsvorrichtung anzeigt, dass eine Reinigung und/oder eine Auswechslung der Abstreifmittel 16 vorgenommen werden sollte. Zusätzlich oder alternativ können Abstreifmittel 16 an einer mechanischen Vorrichtung angeordnet sein, welche unabhängig von einem Brühvorgang automatisch und/oder manuell bewegt werden kann, um die vorhergehend beschriebene abstreifende Bewegung über die Sensormittel 7 und/oder Teile des Innengehäuses 19 und/oder Teile der Substratmehlaufnahme 6 auszuführen.

In der Fig. 2c werden rein beispielhaft verschiedene mögliche Ausführungsformen der Abstreifmittel 16 gezeigt, wobei es denkbar ist, dass mehrere verschieden ausgebildete Abstreifmittel 16 in einem Mahlsystem angeordnet sind.

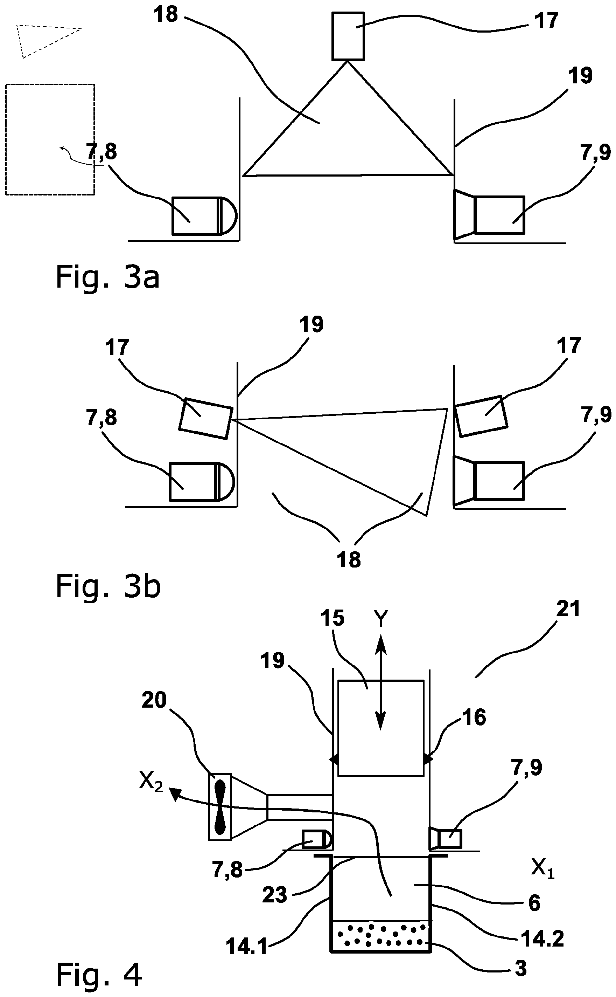

In den Fig. 3a und b werden mögliche Anordnungen von Reinigungsdüsen 17 in einem erfindungsgemäßen Mahlsystem gezeigt, wobei die Anordnungen alternativ zueinander oder beide in einem Mahlsystem ausgebildet sein können. In der Fig. 3 ist eine Reinigungsdüse 17 zentral über der Substratmehlaufnahme 6 angeordnet, wobei die Reinigungsdüse 17 derart ausgerichtet ist, dass ein Sprühkegel 18 wenigstens teilweise das Innengehäuse 19 und/oder die Sensormittel 7 und/oder die Substratmehlaufnahme 6 erreicht. Die Reinigungsdüse 17 ist hierbei bevorzugt mit einem Reinigungsfluidspeicher verbunden, welcher mit einem Reinigungsfluid, zum Beispiel Wasser, gefüllt sein kann, welches durch die Reinigungsdüsen 17 in einem Sprühkegel 18 versprüht wird. Alternativ zu einem Reinigungsfluidspeicher können die Reinigungsdüsen 17 auch mit einem Getränkefluidspeicher verbunden sein.

In der Fig. 3 sind zwei Reinigungsdüsen 17 einander gegenüberliegend an und/oder im Innengehäuse 19 angeordnet, insbesondere über den Sensormitteln 7. Dabei sind vorteilhaft die Reinigungsdüsen 17 an einen Reinigungsfluidspeicher oder einen Getränkefluidspeicher angeschlossen, wobei die Reinigungsdüsen 17 derart angeordnet sind, dass jeweils ein Sprühkegel 18 das gegenüberliegende Sensormittel 7 und/oder teilweise das Innengehäuse 19 und/oder die Substratmehlaufnahme 6 erreicht. Hierbei werden die Reinigungsdüsen 17 bevorzugt nacheinander aktiviert, wobei auch denkbar ist, dass die Reinigungsdüsen 17 gleichzeitig aktiviert werden.

In der Fig. 4 wird ein Teil eines erfindungsgemäßen Mahlsystems in einer Gehäuseumgebung 21 gezeigt. Hierbei ist eine Substratmehlaufnahme 6 umfasst, welche insbesondere als Brühkammer und/oder als Espressosieb ausgebildet ist, wobei die Substratmehlaufnahme 6 unentnehmbar, nur zu Reinigungs- und/oder Wartungszwecken entnehmbar oder grundsätzlich entnehmbar ausgebildet sein kann. Die Substratmehlaufnahme 6 kann ebenso entweder wenigstens teilweise beweglich ausgebildet sein, zum Beispiel um eine Brühposition und/oder eine Ruheposition einnehmen zu können, oder unbeweglich ausgebildet sein. Umfasst von der Substratmehlaufnahme 6 sind Seitenwände 14.1, 14.2, wobei die Substratmehlaufnahme 6 insbesondere zylindrisch ausgebildet ist, welche zumindest teilweise lichtdurchlässig ausgeführt sind, bevorzugt aus lichtdurchlässigem Material, bestehen. In der Substratmehlaufnahme 6 ist Substratmehl 3 aufgenommen, wobei in Fig. 4 das Substratmehl 3 in einem getamperten und/oder komprimierten Zustand nach einem Brühvorgang, insbesondere als Tresterkuchen, vorliegt.

Über der Substratmehlaufnahme 6 ist ein Innengehäuse 19 angeordnet, welches insbesondere als zylindrische Erweiterung über der Substratmehlaufnahme 6 ausgebildet ist, wobei an und/oder im Innengehäuse 19 Sensormittel 7 angeordnet sind, welche bevorzugt wenigstens geringfügig über das Innengehäuse 19 überstehend ausgebildet sind. Die Sensormittel 7 sind in dieser Darstellung inaktiv. Im Gehäuse 19 ist weiterhin ein Brühkolben 15 angeordnet, welcher sich entlang einer Bewegungsachse Y bewegen kann und dem Abstreifmittel 16 zugeordnet sind, welche insbesondere als Abstreiflippen und/oder Abstreifborsten ausgebildet sind.

Das Mahlsystem umfasst weiterhin Lüftungsmittel 20, wobei die Lüftungsmittel derart eingerichtet sind, dass feuchte Luft, insbesondere ausgehend vom Tresterkuchen und/oder der Substratmehlaufnahme 6 und/oder dem Brühkolben 15, in einem Abführstrom X₂ aus der Substratmehlaufnahme 6 und/oder dem Innengehäuse 19 und/oder der Geräteumgebung 21 abgeführt wird. Weiterhin sind die Lüftungsmittel 20 dazu eingerichtet, dass trockene Luft in einem Zuführstrom X₁, insbesondere aus der Geräteumgebung 21, in den Bereich der Substratmehlaufnahme 6 und/oder dem Innengehäuse 19 eingeführt wird. Die Lüftungsmittel 20 können zum Beispiel als Ventilatoren und/oder Luftsaugpumpen ausgebildet sein.

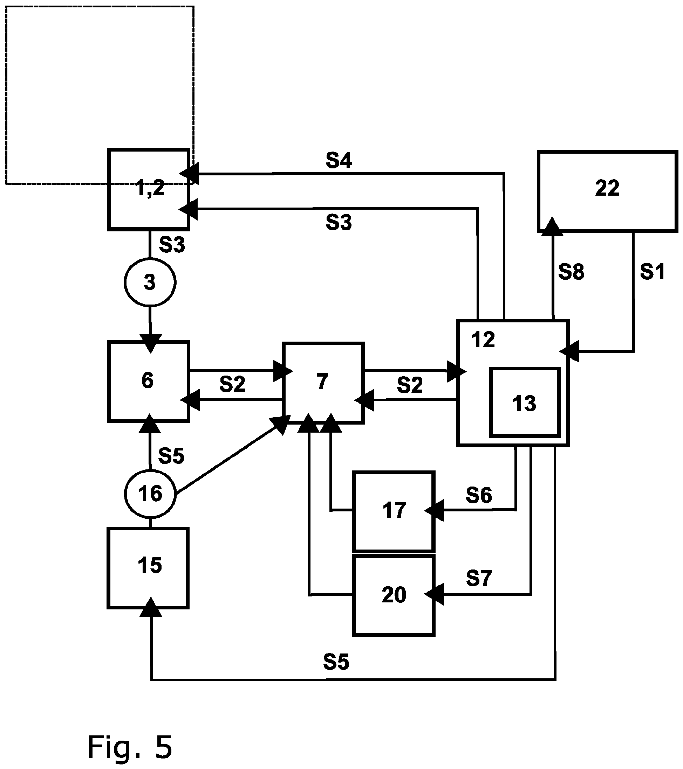

In der Fig. 5 wir eine mögliche Verfahrensführung zum Betrieb eines erfindungsgemäßen Mahlsystems gezeigt. In einem ersten Verfahrensschritt S1 werden durch einen Benutzer des Mahlsystems und/oder der Getränkezubereitungsvorrichtung vorteilhaft gewünschte Getränkeeigenschaften, wie zum Beispiel Getränkeintensität und/oder Sorte des Getränkesubstrats, insbesondere Kaffee- oder Espressobohnensorte, an einer Benutzerschnittstelle 22 festgelegt.

Die entsprechenden Daten werden von der Benutzerschnittstelle 22 an eine Steuereinheit 12 weitergeleitet, welche in einem Verfahrensschritt S2 die Sensormittel 7 aktiviert, wodurch wenigstens ein Signalsender 8 ein Signal 10 abgibt, welches von einem Signalempfänger 9 empfangen wird. Das Signal 10 ist vorteilhaft wenigstens temporär konstant und insbesondere von einer Lichtschranke ausgegeben und detektiert. Die Sensormittel 7 sind dabei derart angeordnet, dass sie bevorzugt wenigstens einen maximalen Füllstand der Substratmehlaufnahme 6 detektieren und/oder Füllstände in und/oder über der Substratmehlaufnahme 6 detektieren. Der Signalempfänger 9 nimmt bei Empfangen des Signals 10 einen passiven Schaltzustand ein, wobei vorteilhaft von der Steuereinheit 12 die Dauer des passiven Zustands erfasst wird. Besonders bevorzugt umfasst der passive Schaltzustand weiterhin eine Übermittlung der Signalqualität des empfangenen Signals 10 an die Steuereinheit 12 durch den Signalempfänger 9. Es ist vorteilhaft denkbar, dass auch der Signalsender 8 Daten an die Steuereinheit 12 übermittelt, zum Beispiel die Qualität des Ausgangssignals. Die Steuereinheit 12 umfasst eine Recheneinheit 13, welche die vom Signalempfänger 9 erhaltenen Signale und/oder Daten auswertet, wobei im Verfahrensschritt S2 vorteilhaft ausgewertet wird, ob die Sensormittel 7 frei von Verschmutzungen sind. Wenn, zum Beispiel durch schlechte Signalqualität oder Unterbrechungen des Empfangs des Signals 10 am Signalempfänger 9, eine Verschmutzung detektiert wird, sendet die Steuereinheit 12 in einem Verfahrensschritt S8 Daten an die Benutzerschnittstelle 22, welche eine Aufforderung zur Reinigung der Sensormittel 7 an einen Benutzer kommuniziert. Alternativ leitet die Steuereinheit 12 einen Reinigungsvorgang ein, wie zum Beispiel in Verfahrensschritt S6.

Wenn die Sensormittel 7 keine Verschmutzungen detektieren, wird durch die Steuermittel 12 in einem Verfahrensschritt S3 die Mahleinheit 1 angesteuert und aktiviert. Hierdurch wird, durch eine Substratzuführöffnung 4 in die Mahleinheit 1 eingebrachtes, Getränkesubstrat durch das Mahlwerk 2 zu Substratmehl 3 gemahlen und über eine Substratmehlausgabe 5 in die Substratmehlaufnahme 6 geführt und/oder transportiert. Die Steuereinheit 12 kann dabei bevorzugt einen Mahlgrad für die Mahleinheit 1 einstellen, wobei besonders bevorzugt die Steuereinheit 12, basierend auf den über die Benutzerschnittstelle 22 definierten Getränkeeigenschaften, automatisch einen Mahlgrad einstellt. Besonders vorteilhaft wird die automatische Mahlgradeinstellung auf Grundlage von Optimierungsprotokollen durchgeführt, welche aus den durch die Recheneinheit 13 ausgewerteten und durch die Steuereinheit 12 und/oder Recheneinheit 13 gespeicherten Daten der Sensormittel 7, insbesondere in Kombination mit den über die Benutzerschnittstelle 22 eingegebenen Daten, durch die Recheneinheit 13 errechnet werden. Während des Mahlvorgangs wird durch den Signalsender 8 ein konstantes Signal 10 gesendet und durch den Signalempfänger 9 empfangen, bis das Substratmehl 3 in der Substratmehlaufnahme 6 zur Höhe der Sensormittel 7 angestiegen ist und den Signalpfad des Signals 10 unterbricht. Wenn das Signal 10 unterbrochen wird wechselt der Signalempfänger 9 in einen aktiven Schaltzustand, wobei der Signalempfänger 9 Signale und/oder Daten an die Steuereinheit 12 sendet, welche das Erreichen eines, insbesondere maximalen, Füllstandes vermitteln. Hierbei ist der Signalsender 8 entweder derart ausgebildet ist, dass eine definierte Dauer der Unterbrechung gegeben sein muss, bis der Wechsel in den aktiven Schaltzustand erfolgt, oder derart, dass erst nach einer definierten Dauer des aktiven Schaltzustandes die Daten und/oder Signale, welche das Erreichen eines Füllstandes vermitteln, gesendet werden. Hierdurch wird erreicht, dass nicht bereits bei Hindurchfallen von Substratmehl 3 durch den Signalpfad des Signals 10 und/oder einer nur kurzzeitigen Unterbrechung des Signals 10, welche durch ein Nachsinken und/oder Abrutschen von Substratmehl 3 aufgelöst wird, das Erreichen eines Füllstands fälschlich angezeigt und das Mahlwerk 2 verfrüht abgeschaltet wird.

In einem Verfahrensschritt S4 werden die von dem Signalsender 9 gesendeten und an der Steuereinheit 12 empfangenen Daten durch die Recheneinheit 13 ausgewertet, insbesondere Wechsel der Schaltzustände und/oder Signalqualität und/oder Signalquantität des ausgesendeten Signals 10 und/oder empfangenen Signals 10 qualitativ und/oder quantitativ. Basierend auf der Auswertung der Daten wird die Mahleinheit 1 bei Erreichen eines gewünschten und/oder maximalen Füllstandes von der Steuereinheit 12 deaktiviert und der Mahlvorgang somit beendet.

Nachdem der Mahlvorgang beendet wurde, wird in einem Verfahrensschritt S5 der Brühvorgang eingeleitet, insbesondere durch die Steuereinheit 12, wobei ein Brühkolben 15 sich entlang einer Bewegungsachse Y auf das Substratmehl 3 zubewegt, insbesondere das Substratmehl 3 tampert, bis ein definierter Tamperdruck erreicht wird. Am Brühkolben 15 sind dabei bevorzugt Abstreifmittel 16 angeordnet, welche insbesondere als Abstreiflippen oder Abstreifborsten ausgebildet sein können, wobei durch die Bewegung des Brühkolbens 15 in Richtung des Substratmehls 3 die Abstreifmittel 16 über die Sensormittel 7 und wenigstens Teile des Innengehäuses 19 geführt werden, wobei sie eine abstreifende Bewegung ausführen, die zu einer Entfernung von groben Verschmutzungen, insbesondere Substratmehl 3, führt. Bei der Rückbewegung des Brühkolbens 15 in seine Ausgangsposition, nachdem der Brühvorgang beendet wurde, führen die Abstreifmittel 16 erneut eine abstreifende Bewegung über die Sensormittel 7 und wenigstens Teile des Innengehäuses 19 durch.

Nachdem der Brühkolben 15 in seine Ausgangsposition zurückgekehrt ist, wird in einem Verfahrensschritt S6 durch die Steuereinheit 12 wenigstens eine Reinigungsdüse 17 angesteuert, wobei die Reinigungsdüse 17 bevorzugt mit einem Reinigungsfluidspeicher oder einem Getränkefluidspeicher verbunden ist und ein Reinigungsfluid in wenigstens einem Sprühkegel 18 abgibt, welcher zumindest die Sensormittel 7, Teile des Innengehäuses 19 und/oder Teile der Substratmehlaufnahme 6 erfasst. Bei mehreren Sprühkegeln 18 können die zu reinigenden Bereiche zwischen den Sprühkegeln 18 aufgeteilt sein.

In einem Verfahrensschritt S7 werden durch die Steuereinheit 12 Lüftungsmittel 20 angesteuert und aktiviert, welche über einen Zuführstrom X₁ trockene Luft aus der Gehäuseumgebung in das Innengehäuse 19 und/oder die Substratmehlaufnahme 6 einbringen, insbesondere in den Bereich der Sensormittel 7. Weiterhin führen die Lüftungsmittel 20 feuchte Luft über einen Abführstrom X₂ aus dem Bereich der Sensormittel und/oder dem Innengehäuse und/oder der Substratmehlaufnahme ab. Der Zuführstrom X₁ und Abführstrom X₂ können dabei vorteilhaft in ihrer Dauer und Lüftungsleistung von der Steuereinheit 12 gesteuert werden. Weiterhin ist vorteilhaft möglich, dass das Mahlsystem einen Feuchtigkeitssensor im Bereich der Sensormittel 7 umfasst, welcher Daten an die Steuereinheit 12 übermittelt, wobei bei Überschreiten eines definierten Grenzwerts, die Lüftungsmittel 20 angesteuert, insbesondere aktiviert, werden.

Die hier aufgezeigte Verfahrensführung ist nur als eine mögliche Ausführungsform zu verstehen, wobei alternative Reihenfolgen der Verfahrensschritte möglich sind, zum Beispiel kann der Verfahrensschritt S7, zum Aktivieren der Lüftungsmittel, auch vor dem Einschalten der Sensormittel 7 in Verfahrensschritt S2 ausgeführt werden. Ebenso ist es möglich, dass Verfahrensschritte mehrfach ausgeführt werden, zum Beispiel der Verfahrensschritt S8 kann zum Anzeigen verschiedener Informationen über die Benutzerschnittstelle 22 Anwendung finden, neben der Anzeige einer Verschmutzung der Sensormittel 7 rein beispielhaft auch zum Anzeigen von fehlendem Getränkesubstrat und/oder des von der Steuereinheit 12 automatisch eingestellten Mahlgrads. Des Weiteren ist vorteilhaft möglich, dass Verfahrensschritte sich zeitlich überschneidend oder parallel ablaufen.

### Bezugszeichenliste

- 1: Mahleinheit
- 2: Mahlwerk
- 3: Substratmehl
- 4: Substratzuführöffnung
- 5: Substratmehlausgabe
- 6: Substratmehlaufnahme
- 7: Sensormittel
- 8: Signalsender
- 9: Signalempfänger
- 10: Signal
- 11: Signalreflektor
- 12: Steuereinheit
- 13: Recheneinheit
- 14.1: Seitenwand der Substratmehlaufnahme
- 14.2: Seitenwand der Substratmehlaufnahme
- 15: Brühkolben
- 16: Abstreifmittel
- 17: Reinigungsdüse
- 18: Sprühkegel
- 19: Innengehäuse
- 20: Lüftungsmittel
- 21: Gehäuseumgebung
- 22: Benutzerschnittstelle
- 23: Oberer Rand der Substratmehlaufnahme

- H: Höhenrichtung der Substratmehlaufnahme
- Y: Bewegungsachse des Brühkolbens
- X₁: Zuführstrom trockener Luft
- X₂: Abführstrom feuchter Luft

- S1: Erster Verfahrensschritt
- S2: Zweiter Verfahrensschritt
- S3: Dritter Verfahrensschritt
- S4: Vierter Verfahrensschritt
- S5: Fünfter Verfahrensschritt
- S6: Sechster Verfahrensschritt
- S7: Siebter Verfahrensschritt
- S8: Achter Verfahrensschritt

## Patentansprüche

1. Mahlsystem, zur Bereitstellung einer von einem zuzubereitenden Getränk und/oder Getränkeeigenschaft abhängigen Substratmehlportion,
umfassend eine Mahleinheit (1), welche ein Mahlwerk (2) zum Mahlen von Getränkesubstrat zu Substratmehl (3) umfasst, wobei das Mahlwerk (2) eine, insbesondere mit einem Substratspeicher verbindbare, Substratzuführöffnung (4) umfasst, zur Einbringung des Getränkesubstrats in das Mahlwerk (2) und eine Substratmehlausgabe (5), durch welche das gemahlene Substratmehl (3) aus dem Mahlwerk (2) austreten kann, und eine Substratmehlaufnahme (6), insbesondere Brühkammer, welche zur Aufnahme einer Substratmehlportion für die Zubereitung eines Getränks und/oder einer Vielzahl von Getränken ausgebildet ist, wobei die Substratmehlausgabe (5) als Führungs- und/oder Transportmittel zwischen dem Mahlwerk (2) und der Substratmehlaufnahme (6) angeordnet ist,
**dadurch gekennzeichnet,**
**dass** dem Mahlsystem Sensormittel (7), insbesondere eine Lichtschranke, zugeordnet sind, welche zum Detektieren eines Erreichens eines, insbesondere maximalen, Füllstandes von Substratmehl (3) in der Substratmehlaufnahme (6) eingerichtet sind.

2. Mahlsystem nach Anspruch 1,
**dadurch gekennzeichnet,**
**dass** die Sensormittel (7) einen Signalsender (8), insbesondere Lichtstrahlensender, und einen Signalempfänger (9), insbesondere Lichtstrahlenempfänger, umfassen, wobei der Signalsender (8) zum Senden eines Signals (10) an den Signalempfänger (9) eingerichtet ist, welches, insbesondere durch Substratmehl (3), abgeschnitten werden kann.

3. Mahlsystem nach Anspruch 2,
**dadurch gekennzeichnet,**
**dass** der Signalsender (8) und Signalempfänger (9) einander gegenüberliegend und/oder aufeinander ausgerichtet ausgebildet sind, wobei das vom Signalsender (8) ausgegebenes Signal (9), bevorzugt unmittelbar, vom Signalempfänger (8) erfasst wird.

4. Mahlsystem nach Anspruch 2,
**dadurch gekennzeichnet,**
**dass** der Signalsender (8) und der Signalempfänger (9) aneinander und/oder nebeneinander ausgebildet sind, wobei dem Signalsender (8) und Signalempfänger (9) gegenüberliegend ein Signalreflektor (11) angeordnet ist, welcher ein vom Signalsender (8) ausgegebenes Signal (10) derart reflektiert, insbesondere zurückwirft, dass das Signal (10) vom Signalempfänger (9) erfasst wird.

5. Mahlsystem nach einem der Ansprüche 1 bis 4,
**dadurch gekennzeichnet,**
**dass** das Mahlsystem eine, bevorzugt elektronische, Steuereinheit (12) umfasst, welche mit den Sensormitteln (7) zumindest datentechnisch verbunden ist, wobei die Steuereinheit (12) zur Steuerung der Sensormittel (7), insbesondere Aktivierung und/oder Deaktivierung, eingerichtet ist.

6. Mahlsystem nach Anspruch 5,
**dadurch gekennzeichnet,**
**dass** die Steuereinheit (12) eine Recheneinheit (13) umfasst, welche zur Auswertung und/oder Speicherung der Signale (10) eingerichtet ist, insbesondere zur qualitativen und/oder quantitativen Auswertung eines Wechsels der Schaltzustände und/oder Signalqualität und/oder Signalquantität des ausgesendeten Signals (10) und/oder empfangenen Signals (10).

7. Mahlsystem nach einem der Ansprüche 5 oder 6,
**dadurch gekennzeichnet,**
**dass** die Steuereinheit (12) zumindest datentechnisch mit der Mahleinheit (1) verbunden ist, derart, dass auf Grundlage der ausgewerteten Signale (10) eine Steuerung der Mahleinheit (1), insbesondere Beginnen und/oder Fortführen und/oder Beenden des Mahlvorgangs durch das Mahlwerk (2), umsetzbar ist.

8. Mahlsystem nach einem der Ansprüche 2 bis 7,
**dadurch gekennzeichnet,**
**dass** die Sensormittel (7) wenigstens zwei, bevorzugt eine Vielzahl, von Paaren von Signalsendern (8) und Signalempfängern (9) umfassen.

9. Mahlsystem nach einem der Ansprüche 2 bis 8,
**dadurch gekennzeichnet,**
**dass** die Substratmehlaufnahme (6) wenigstens abschnittsweise oder vollständig lichtdurchlässig ausgebildet ist, insbesondere im Bereich von Seitenwänden (14.1, 14.2), wobei die Sensormittel (7) wenigstens teilweise entlang einer Höhenrichtung (H) der Substratmehlaufnahme (6), insbesondere die Substratmehlaufnahme (6) flankierend, angeordnet sind, derart, dass das Signal (10) oder die Signale (10) durch die, bevorzugt Seitenwände (14.1, 14.2) der, Substratmehlaufnahme (6) gesendet wird.

10. Mahlsystem nach einem der Ansprüche 1 bis 9,
**dadurch gekennzeichnet,**
**dass** das Mahlsystem einen, insbesondere beweglichen, Brühkolben (15) umfasst, wobei dem Brühkolben (15), insbesondere als Abstreiflippen und/oder Abstreifborsten ausgebildete, Abstreifmittel (16) zugeordnet sind.

11. Mahlsystem nach einem der Ansprüche 1 bis 10,
**dadurch gekennzeichnet,**
**dass** das Mahlsystem wenigstens eine, bevorzugt eine Vielzahl von, Reinigungsdüsen (17), insbesondere Sprühdüsen, aufweist, welche derart angeordnet sind, dass die Sensormittel (7) und/oder die Substratmehlaufnahme (6) von einem oder mehreren Sprühkegeln (18) eines Reinigungsfluids erfasst sind.

12. Mahlsystem nach einem der Ansprüche 1 bis 11,
**dadurch gekennzeichnet,**
**dass** dem Mahlsystem, bevorzugt an einem Innengehäuse (19) angeordnete, Lüftungsmittel (20) zugeordnet sind, welche bevorzugt wenigstens datentechnisch mit der Steuereinheit (12) verbunden sind.

13. Getränkezubereitungsvorrichtung, insbesondere Kaffee- und/oder Espressomaschine,
**gekennzeichnet durch** ein Mahlsystem nach einem der Ansprüche 1 bis 12.

14. Verfahren zum Betrieb eines Mahlsystems nach einem der vorhergehenden Ansprüche, insbesondere für eine Getränkezubereitungsvorrichtung, bevorzugt Kaffee- und/oder Espressomaschine, zur Bereitstellung einer von einem zuzubereitenden Getränk und/oder Getränkeeigenschaft abhängigen Substratmehlportion, umfassend eine Mahleinheit (1) mit einem Mahlwerk (2), welches Getränkesubstrat zu Substratmehl (3) zermahlt, wobei das Mahlwerk (2) eine, insbesondere mit einem Substratspeicher verbindbare, Substratzuführöffnung (4) umfasst, welche Getränkesubstrat in das Mahlwerk (2) einbringt, und eine Substratmehlausgabe (5), durch welche das gemahlene Substratmehl (3) aus dem Mahlwerk (2) austritt,
und eine Substratmehlaufnahme (6), insbesondere Brühkammer, welche eine Substratmehlportion für die Zubereitung eines Getränks und/oder einer Vielzahl von Getränken aufnimmt,
wobei die Substratmehlausgabe (5) das Substratmehl (3) zwischen dem Mahlwerk (2) und der Substratmehlaufnahme (6) führt und/oder transportiert,
**dadurch gekennzeichnet,**
**dass** Sensormittel (7) umfasst sind, insbesondere eine Lichtschranke, welche ein Erreichen eines, insbesondere maximalen, Füllstandes von Substratmehl (3) in der Substratmehlaufnahme (6) detektieren.

15. Verfahren zum Betrieb eines Mahlsystems nach Anspruch 14,
**dadurch gekennzeichnet,**
**dass** ein Signalsender (8), insbesondere Lichtstrahlensender, ein Signal (10) an einen Signalempfänger (9), insbesondere Lichtstrahlenempfänger, sendet, welcher das Signal (10) erfasst, wobei Substratmehl (3), insbesondere bei Erreichen eines definierten Füllstands in der Substratmehlaufnahme (6), das Signal (10) abschneidet.

16. Verfahren zum Betrieb eines Mahlsystems nach einem der Ansprüche 14 oder 15,
**gekennzeichnet durch**,
eine Steuerung der Sensormittel (7) **durch** eine, bevorzugt elektronische, Steuereinheit (12) welche zumindest datentechnisch mit den Sensormitteln (7) verbunden ist und, insbesondere die Sensormittel (7) aktiviert oder deaktiviert.

17. Verfahren zum Betrieb eines Mahlsystems nach Anspruch 16,
**dadurch gekennzeichnet,**
**dass** eine der Steuereinheit (12) zugeordnete Recheneinheit (13) die Signale (10) auswertet und/oder speichert, insbesondere Wechsel der Schaltzustände und/oder Signalqualität und/oder Signalquantität des ausgesendeten Signals (10) und/oder empfangenen Signals (10) qualitativ und/oder quantitativ auswertet und/oder speichert.

18. Verfahren zum Betrieb eines Mahlsystems nach einem der Ansprüche 16 oder 17,
**gekennzeichnet durch**,
eine Steuerung der Mahleinheit (1) auf Grundlage der ausgewerteten Signale (10) **durch** die Steuereinheit (12), insbesondere Beginnen und/oder Fortführen und/oder Beenden des Mahlvorgangs **durch** das Mahlwerk (2).

19. Verfahren zum Betrieb eines Mahlsystems nach einem der Ansprüche 16 bis 18,
**dadurch gekennzeichnet,**
**dass** die Sensormittel (10) von der Steuereinheit (12) aktiviert werden, bevor die Mahleinheit (1), insbesondere bei Beginn eines Mahl- und/oder Brühvorgangs, von der Steuereinheit (12) aktiviert wird.

20. Verfahren zum Betrieb eines Mahlsystems nach einem der Ansprüche 14 bis 19,
**gekennzeichnet durch**,
ein Abstreifen der Sensormittel (7) **durch**, insbesondere als Abstreiflippen und/oder Abstreifborsten ausgebildete, Abstreifmittel (16) an einem beweglichen Brühkolben (15), welcher sich zur Einleitung eines Brühvorgangs in Richtung der Substratmehlaufnahme (6) bewegt, wodurch die Abstreifmittel (16) eine abstreifende Bewegung an und/oder über die Sensormittel (7) und/oder das Innengehäuse (19) und/oder die Substratmehlaufnahme (6), insbesondere die innere Seite der Seitenwände (14.1, 14.2), ausführen.

21. Verfahren zum Betrieb eines Mahlsystems nach einem der Ansprüche 16 bis 20,
**dadurch gekennzeichnet,**
**dass** vor und/oder nach einem Mahlvorgang und/oder Getränkebrühvorgang die Steuereinheit (12) Reinigungsdüsen (17) ansteuert, insbesondere aktiviert und deaktiviert, welche mit einem Reinigungsfluid die Sensormittel (7) und/oder Substratmehlaufnahme (6) reinigen, bevorzugt absprühen.

22. Verfahren zum Betrieb eines Mahlsystems nach einem der Ansprüche 16 bis 21,
**dadurch gekennzeichnet,**
**dass** die Steuereinheit (12) Lüftungsmittel (20) steuert, welche, insbesondere feuchte, Luft aus dem Bereich der Sensormittel (7) abführen und, insbesondere trockene, Luft zuführen.
